# EUROPÄISCHE PATENTSCHRIFT

(11) **EP 4 269 194 B1**
(45) Veröffentlichungstag und Bekanntmachung des Hinweises auf die Patenterteilung: **25.06.2025**
(21) Anmeldenummer: 23164745.4
(22) Anmeldetag: 28.03.2023
(51) Int. Cl.: B60T 8/32, B60T 8/88, B60T 13/66

(54) **BREMSANLAGE EINES FAHRZEUGS**
BRAKING SYSTEM OF A VEHICLE
SYSTÈME DE FREINAGE D'UN VÉHICULE

(30) Priorität: 26.04.2022 DE 102022109991
(43) Veröffentlichungstag der Anmeldung: 01.11.2023
(73) Patentinhaber: AUDI AG, 85057 Ingolstadt (DE)
(72) Erfinder: Brok, Tobias, 85092 Kösching (DE); Förster, Kilian, 92339 Beilngries (DE); Schneider, Werner, 85051 Ingolstadt (DE); Wolfram, Christopher, 07343 Wurzbach (DE)

(56) Entgegenhaltungen:
- DE-A1- 10 330 145
- DE-A1- 102004 021 648
- DE-A1- 102010 038 971
- DE-A1- 102020 206 436

## Beschreibung

Die Erfindung betrifft eine Bremsanlage eines Fahrzeugs nach dem Oberbegriff des Anspruches 1 sowie ein Verfahren zur Erkennung eines Halterversagens in einer solchen Bremsanlage gemäß Anspruch 9.

Die Bremsanlage eines Fahrzeugs kann als ein Brake-by-wire-System ausgeführt sein, bei dem das Bremspedal nicht in mechanischer Verbindung, sondern nur in elektrischer Signalverbindung mit einem Bremsregelsystem ist. Das Bremsregelsystem baut bei einer Bremsanforderung (vom Fahrer oder von einer Fahrdynamikregelung) einen hydraulischen Bremsdruck auf, mit dem die Fahrzeugbremsen ansteuerbar sind.

Eine solche Bremsanlage kann zur Bereitstellung einer Rückfallebene zwei Bremsregelsysteme aufweisen, nämlich ein Primärbremsregelsystem und ein Sekundärbremsregelsystem. Bei einer fehlerhaften Funktion des Primärbremsregelsystems übernimmt das Sekundärbremsregelsystem die Funktion des Primärbremsregelsystems. Die beiden Bremsregelsysteme können im Hinblick auf einen möglichst geringen Bauraumbedarf sowie eine Bauteilreduzierung mit Hilfe eines gemeinsamen Halters an der Fahrzeugkarosserie befestigt sein.

Aus Sicherheitsgründen muss das gleichzeitige Eintreten eines gemeinsamen Fehlers beider Bremsregelsysteme unterbunden sein. Ein solcher gemeinsamer Fehler würde vorliegen, wenn der für beide Bremsregelsysteme vorgesehene Halter bricht und nach einiger Zeit dadurch die hydraulischen Verbindungen reißen oder undicht werden.

Aus der DE 103 30 145 A1 ist ein Drucksteuergerät bekannt. Aus der DE 10 2004 021 648 A1 ist ein Verfahren und eine Vorrichtung zur Störeinflussbereinigung eines beschleunigungsabhängigen Sensorsignals bekannt. Aus der DE 10 2010 038 971 A1 ist eine Vorrichtung zum Bewerten eines Zustands eines Fahrwerks eines Fahrzeugs bekannt. Aus der DE 10 2006 051 261 A1 ist ein Verfahren in einem elektronischen Bremsenregelungssystem bekannt. Aus der DE 10 2020 206 436 A1 ist ein Verfahren zur Kommunikation zwischen zwei hydraulischen Bremsregelsystemen in einem Bremssystem bekannt.

Die Aufgabe der Erfindung besteht darin, eine Bremsanlage bereitzustellen, in der eine einfache Erkennung einer Beschädigung eines Halters ermöglicht ist, über den zumindest ein Bremsregelsystem an der Fahrzeugkarosserie befestigt ist.

Die Aufgabe der Erfindung ist durch die Merkmale des Anspruches 1 oder 9 gelöst. Bevorzugte Weiterbildungen der Erfindung sind in den Unteransprüchen offenbart.

Die Erfindung geht von einer Bremsanlage aus, die zumindest ein Bremsregelsystem mit einem Bremsdrucksteller aufweist. Dieser baut bei einer Bremsanforderung einen hydraulischen Bremsdruck auf, mit dem Fahrzeugradbremsen betätigbar sind. Das Bremsregelsystem ist über einen Halter an der Fahrzeugkarosserie befestigt. Gemäß dem kennzeichnenden Teil des Anspruches 1 kann ein Versagen des Halters, etwa durch Bruch oder durch eine gelockerte Schraubverbindung zwischen dem Halter und der Fahrzeugkarosserie, mit folgender Maßnahme einfach erkannt werden: So ist der Bremsanlage eine Auswerteeinheit zugeordnet, die einen Sensorsignalverlauf von einem im Bremsregelsystem verbauten, internen Sensor erfasst. Die Auswerteeinheit weist einen Vergleicherbaustein auf, in dem ein Signalvergleich erfolgt, bei dem der erfasste Sensorsignalverlauf mit einem Referenzsignalverlauf verglichen wird. Die Auswerteeinheit erzeugt bei einer signifikanten Abweichung des erfassten Sensorsignalverlaufs von dem Referenzsignalverlauf ein Halterschaden-Signal. Dadurch kann der Kunde oder die Werkstatt informiert werden, zum Beispiel aufgrund einer Warnlampe oder eines Hinweistextes oder eines Eintrags in dem Servicespeicher oder dergleichen, damit der Schaden behoben werden kann.

Der Vergleich des erfassten Sensorsignalverlaufes mit dem Referenzsignalverlauf kann durch einen Vergleich von internen und externen Sensorverläufen realisiert werden. Alternativ dazu kann ein zeitlicher Vergleich des internen Sensors (vorher wenig Amplitude, nach Bruch große Amplitude) erfolgen. In einer weiteren Alternative kann ein Vergleich von Sensorwerten in den beiden Bremsregelsystemen auf Schwingungsformen (zum Beispiel gleich schwingend vor Bruch, danach gegenläufiges Schwingen, Amplitude und so weiter) beruhen. Die obigen Vergleiche sind auch bei klassischen ESC-Systemen anwendbar. Diese haben ebenfalls keine Kopplung mit der Pedalerie, aber einen Halter, der brechen kann.

Im Bremsregelsystem sind in gängiger Praxis unterschiedliche, interne Sensoren verbaut, deren Hauptfunktion darin besteht, die Funktionsweise des Bremsregelsystems zu überwachen. Beispielhaft kann ein solcher interner Sensor ein Füllstandsensor eines Hydraulikflüssigkeitsbehälters des Bremsregelsystems sein. Alternativ und/oder zusätzlich kann der interne Sensor ein Beschleunigungssensor sein, auf dessen Grundlage eine Fahrdynamikregelung das Bremsregelsystem ansteuert, um fahrdynamische Bremseingriffe vorzunehmen. Erfindungsgemäß wird ein solcher bremsregelsysteminterner Sensor in Doppelfunktion auch bei der Erkennung eines Halterversagens verwendet.

Es ist hervorzuheben, dass die Erfindung nicht auf einen Halter begrenzt ist, der sowohl ein Primärbremsregelsystem als auch ein Sekundärbremsregelsystem trägt, wie es in der Beschreibungseinleitung dargelegt ist, sondern vielmehr auch auf einen Halter anwendbar ist, der lediglich ein einziges Bremsregelsystem trägt.

In einer besonders bevorzugten Ausführungsform kann die Bremsanlage als ein Brake-by-wire-System ausgeführt, das sowohl ein Primärbremsregelsystem als auch ein Sekundärbremsregelsystem bereitstellt. Bei einer fehlerhaften Funktion des Primärbremsregelsystems übernimmt das Sekundärbremsregelsystem die Funktion des Primärbremsregelsystems. Bevorzugt sind die beiden Bremsregelsysteme gemeinsam am Halter befestigt.

Im Hinblick auf eine zuverlässige Auswertung des vom internen Sensor erzeugten Sensorsignalverlaufes ist die folgende Maßnahme bevorzugt: So kann die Auswerteeinheit zusätzlich in Signalverbindung mit einem, nicht im Bremsregelsystem verbauten, externen Sensor sein, bevorzugt ein Beschleunigungssensor. Dieser kann auf der Grundlage von Fahrzeugschwingungen im Fahrbetrieb ein Schwingungssignal erzeugen. Mit Hilfe des externen Sensors kann ein Abgleich des vom internen Sensor erzeugten Sensorsignalverlaufes durchgeführt werden. Beispielhaft kann vor der Durchführung des Signalvergleiches in der Auswerteeinheit das Fahrzeugschwingungssignal vom Sensorsignalverlauf des internen Sensors subtrahiert werden. Dies erfolgt unter Bildung eines modifizierten Sensorsignalverlaufes. Der modifizierte Sensorsignalverlauf ist daher von einem Schwingungsanteil bereinigt, der sich aus den Fahrzeugschwingungen ergibt. In diesem Fall kann der Signalvergleich in der Auswerteeinheit mit dem modifizierten Sensorsignalverlauf durchgeführt werden.

Alternativ und/oder zusätzlich kann die Auswerteeinheit das Vorliegen von Halterversagen nur dann prüfen, wenn die vom externen Sensor erfasste Fahrzeugschwingung unterhalb eines Grenzwertes liegt. Auf diese Weise kann eine fehlerhafte Erzeugung eines Halterschaden-Signals aufgrund übermäßig großer Fahrzeugschwingung verhindert werden, etwa bei besonders unruhiger Fahrbahn. In diesem Fall würde ansonsten das Risiko bestehen, dass der vom internen Sensor erfasste Sensorsignalverlauf aufgrund zu hohem Fahrzeugschwingungsanteil nicht mehr aussagekräftig in Bezug auf einen Halterschaden ist. Zudem kann die Auswerteeinheit auch eine Regelsituation, zum Beispiel ABS Bremsung, berücksichtigen. Hier unterscheiden sich die Schwingungen des Geräte nach Halterbruch deutlich von denen vor dem Bruch.

Wie oben erwähnt, erfolgt im Vergleicherbaustein der Auswerteeinheit der Signalvergleich zwischen dem vom internen Sensor erfassten Sensorsignalverlauf und einem Referenzsignalverlauf. Der Referenzsignalverlauf kann gemäß einer Ausführungsvariante ein Signalverlauf des internen Sensors sein, der sich im normalen Fahrbetrieb sowie bei intaktem Halter einstellt. Der Referenzsignalverlauf kann in der Auswerteeinheit als Sollwert hinterlegt sein.

In einer weiteren Ausführungsvariante kann sowohl im Primärbremsregelsystem als auch im Sekundärbremsregelsystem jeweils ein interner Sensor verbaut sein. Beide interne Sensoren können in die Erkennung eines Halterversagens integriert sein. In diesem Fall können die Sensorsignalverläufe der beiden internen Sensoren in der Auswerteeinheit miteinander verglichen werden. Somit bildet der Sensorsignalverlauf des einen Sensorsignalverlaufes den Referenzsignalverlauf für den Sensorsignalverlauf des anderen Sensorsignalverlaufes.

Nachfolgend sind Ausführungsbeispiele der Erfindung anhand der beigefügten Figuren beschrieben.

Es zeigen:
- Fig. 1: eine in einem Fahrzeug verbaute Bremsanlage gemäß einem ersten Ausführungsbeispiel;
- Fig. 2: Signalverläufe eines internen Sensors der Bremsanlage;
- Fig. 3 bis 5: Ansichten entsprechend der Fig. 1 gemäß weiteren Ausführungsbeispielen.

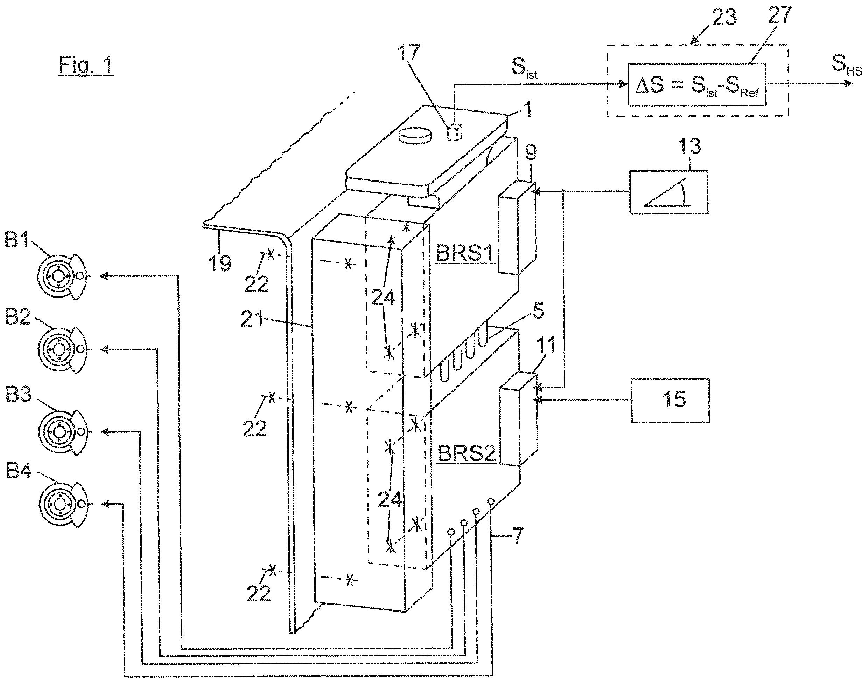

In der Figur 1 ist in einer Prinzipdarstellung eine in einem Fahrzeug verbaute Bremsanlage insoweit gezeigt, als es für das Verständnis der Erfindung erforderlich ist. Diese ist als ein Brake-by-wire-System ausgeführt, und zwar mit einem Primärbremsregelsystem BRS1 und einem Sekundärbremsregelsystem BRS2. Jedes der beiden Bremsregelsysteme BRS1 und BRS2 weist einen nicht gezeigten Bremsdrucksteller, zum Beispiel eine Kolbenpumpe oder eine Kreiselpumpe, auf. Der Bremsdrucksteller baut bei einer Bremsanforderung einen hydraulischen Bremsdruck auf, mit dem die Fahrzeugradbremsen B1 bis B4 betätigbar sind. In der Figur 1 sind den beiden Bremsregelsystemen BRS1, BRS2 ein Hydraulikflüssigkeitsbehälter 1 zugeordnet. Dieser ist an der Oberseite des Primärbremsregelsystems BRS1 angeordnet und mit beiden Bremsregelsystemen BRS1, BRS2 verbunden. Das Primärbremsregelsystem BRS1 ist über Hydraulikleitungen 5 in Verbindung mit dem Sekundärbremsregelsystem BRS2. Vom Sekundärbremsregelsystem BRS2 führen weitere Hydraulikleitungen 7 zu den Fahrzeugradbremsen B1 bis B4.

Jedes der beiden Bremsregelsysteme BRS1 und BRS2 weist ein Steuergerät 9, 11 auf. Die Steuergeräte 9, 11 der beiden Bremsregelsysteme BRS1, BRS2 sind in elektrischer Signalverbindung mit einem elektronischen Bremspedal 13. Zudem ist das Steuergerät 11 des Sekundärbremsregelsystems BRS2 von einer Fahrdynamikregelung 15 elektrisch ansteuerbar. Bei einer fehlerhaften Funktion des Primärbremsregelsystems BRS1 übernimmt das Sekundärbremsregelsystem BRS2 die Funktion des Primärbremsregelsystems BRS1.

Die beiden Bremsregelsysteme BRS1, BRS2 sind nicht direkt an der Fahrzeugkarosserie 19 befestigt, sondern unter Zwischenschaltung eines separaten Halters 21, an dem die beiden Bremsregelsysteme BRS1, BRS2 befestigt sind. Der Halter 21 ist über Schraubverbindungen 22 an der Fahrzeugkarosserie 19 angebunden, während die beiden Bremsregelsysteme BRS1, BRS2 über Schraubverbindungen 24 am Halter 19 montiert sind.

In der Figur 1 ist zur Erkennung eines Halterversagens eine Auswerteeinheit 23 bereitgestellt, die in Signalverbindung mit einem bremsregelsysteminternen Sensor 17 ist. Der interne Sensor 17 ist in der Figur 1 ein Füllstandsensor. Dessen Hauptfunktion besteht in der Überwachung des Füllstands der Hydraulikflüssigkeit im Hydraulikflüssigkeitsbehälter 1. Durch Auswertung eines Sensorsignalverlaufes Sist des internen Sensors 17 erkennt die Auswerteeinheit 23 ein Halterversagen. Hierzu ist in der Auswerteeinheit 23 ein Referenzsignalverlauf 25 ein Sensorsignalverlauf des internen Sensors 17 hinterlegt, der sich im normalen Fahrbetrieb sowie bei intaktem Halter 21 einstellt. In einem Vergleicherbaustein 27 der Auswerteeinheit 23 erfolgt ein Signalvergleich, bei dem der erfasste Sensorsignalverlauf Sᵢₛₜ mit dem in der Auswerteeinheit 23 hinterlegten Referenzsignalverlauf S_{Ref} verglichen wird.

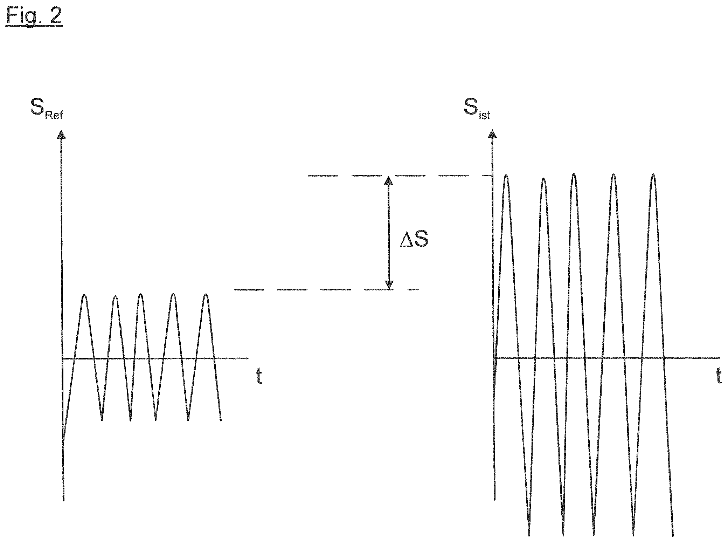

In der Figur 2 ist im linken Zeitdiagramm beispielhaft der Referenzsignalverlauf S_{Ref} gezeigt, der sich im normalen Fahrbetrieb bei intaktem Halter 21 einstellt. Im rechten Zeitdiagramm ist der aktuelle Sensorsignalverlauf Sᵢₛₜ des internen Sensors 17 gezeigt. Die beiden Signalverläufe S_{Ref} und Sᵢₛₜ sind in der Figur 2 der Einfachheit halber jeweils als kontinuierliche Sinusschwingung gezeigt. Tatsächlich setzen sich die beiden Signalverläufe S_{Ref} und Sᵢₛₜ aus einer Mehrzahl zueinander überlagerter Sinusschwingungen zusammen, die unterschiedliche Frequenzen und Amplituden aufweisen. Im Vergleich beider Signalverläufe S_{Ref} und Sᵢₛₜ ist in der Figur 2 eine signifikante Abweichung ΔS erkennbar, die sich zum Beispiel bei einem Halterbruch oder bei lockeren Schraubverbindungen 22, 24 einstellt. Bei Vorliegen einer solchen signifikanten Abweichung ΔS erzeugt die Auswerteeinheit 23 ein Halterschaden-Signal S_{HS}, mit dem der Kunde oder die Werkstatt informiert wird, zum Beispiel über eine Warnlampe, einem Hinweistext oder einem Eintrag in den Servicespeicher.

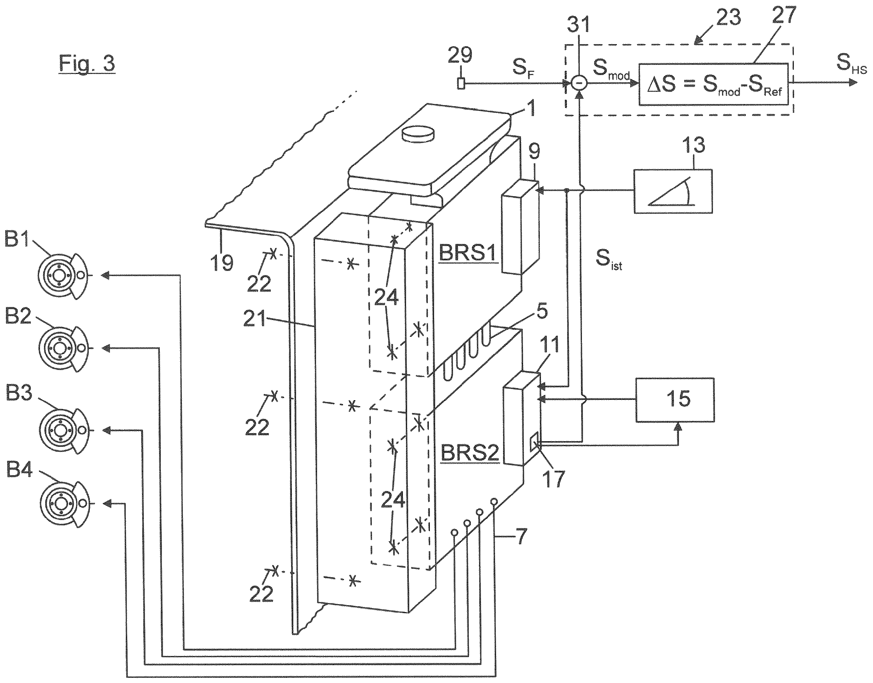

In der Figur 3 ist ein zweites Ausführungsbeispiel gezeigt, dessen grundsätzlicher Aufbau und Funktionsweise im Wesentlichen dem Aufbau sowie der Funktionsweise des vorangegangenen Ausführungsbeispiels entspricht. Im Unterschied zur Figur 1 weist die Bremsanlage in der Figur 3 als internen Sensor 17 einen Beschleunigungssensor auf, der im Steuergerät 11 des Sekundärbremssystems BRS2 verbaut ist. Der Beschleunigungssensor ist sowohl mit der Auswerteeinheit 23 als auch mit der Fahrdynamikregelung 15 in Signalverbindung. Auf der Grundlage der vom Beschleunigungssensor erfassten Quer- und/oder Längsbeschleunigungen steuert die Fahrdynamikregelung 15 das Sekundärbremsregelsystem BRS2 an, um fahrdynamische Bremseingriffe vorzunehmen. Im Ausführungsbeispiel der Figur 3 detektiert die Auswerteeinheit 23 anhand der vom Beschleunigungssensor 17 erfassten Quer- und/oder Längsbeschleunigungen ein Halterversagen.

Im Hinblick auf eine zuverlässige Erkennung eines solchen Halterversagens ist die Auswerteinheit 23 in der Figur 3 zusätzlich in Signalverbindung mit einem, nicht im Bremsregelsystem BRS1, BRS2 verbauten, externen Sensor 29, bevorzugt Beschleunigungssensor. Dieser erfasst Fahrzeugschwingungen im Fahrbetrieb. Bedingt durch die Fahrzeugschwingungen erzeugt der externe Sensor 29 ein Fahrzeugschwingungssignal S_{F}. In der Figur 3 weist die Auswerteeinheit 23 ein Subtrahierglied 31 auf. Vor Durchführung des Signalvergleiches im Vergleicherbaustein 27 wird das Fahrzeugschwingungssignal S_{F} vom Sensorsignalverlauf Sᵢₛₜ des internen Sensors 17 subtrahiert, wodurch sich ein modifizierter Sensorsignalverlauf S_{mod} ergibt. Dieser ist von dem durch Fahrzeugschwingungen verursachten Schwingungsanteil bereinigt. Der modifizierte Sensorsignalverlauf S_{mod} wird dem Vergleicherbaustein 27 zugeführt. Dort erfolgt, wie in der Figur 1, ein Signalvergleich. Bei einer signifikant größeren Abweichung ΔS wird das Halterschaden-Signal S_{HS} erzeugt. Aufgrund des bereinigten, modifizierten Sensorsignalverlaufes S_{mod} kann eine fehlerhafte Erzeugung des Halterschaden-Signals S_{HS}, die sich aufgrund einer übermäßig großen Fahrzeugschwingung ergibt, verhindert werden.

Der externe Sensor 29 kann in diversen anderen Bauteilen des Fahrzeugs, zum Beispiel in einem Airbagsteuergerät, verbaut sein. Beispielhaft kann der externe Sensor 29 ein 3D-, ein Längs- oder Querbeschleunigungssensor oder auch ein Füllstandsensor sein.

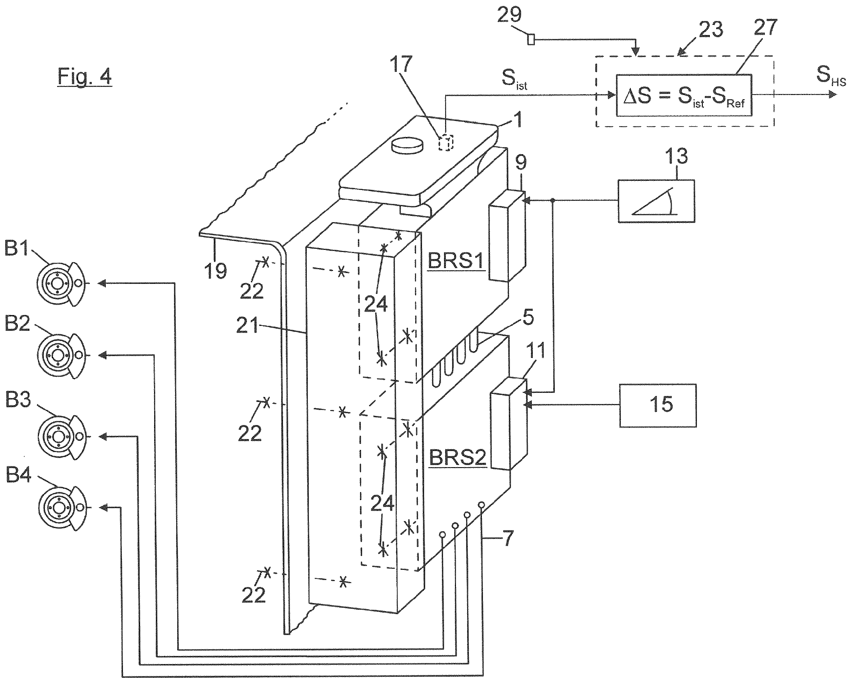

In der Figur 4 ist ein dazu alternatives Ausführungsbeispiel angedeutet, mit dem ebenfalls eine (aufgrund übermäßig großer Fahrzeugschwingung) fehlerhafte Erzeugung eines Halterschaden-Signals S_{HS} vermieden werden kann. Das Ausführungsbeispiel der Figur 4 entspricht im Wesentlichen dem Ausführungsbeispiel der Figur 1. Im Unterschied zur Figur 1 startet in der Figur 4 der Vergleicherbaustein 27 einen Signalvergleich nur dann, wenn die vom externen Beschleunigungssensor 29 erfasste Fahrzeugschwingung unterhalb eines Grenzwertes liegt. Auf diese Weise kann eine fehlerhafte Erzeugung eines Halterschaden-Signals S_{HS} aufgrund übermäßig großer Fahrzeugschwingungen, etwa bei besonders unruhiger Fahrbahn, verhindert werden.

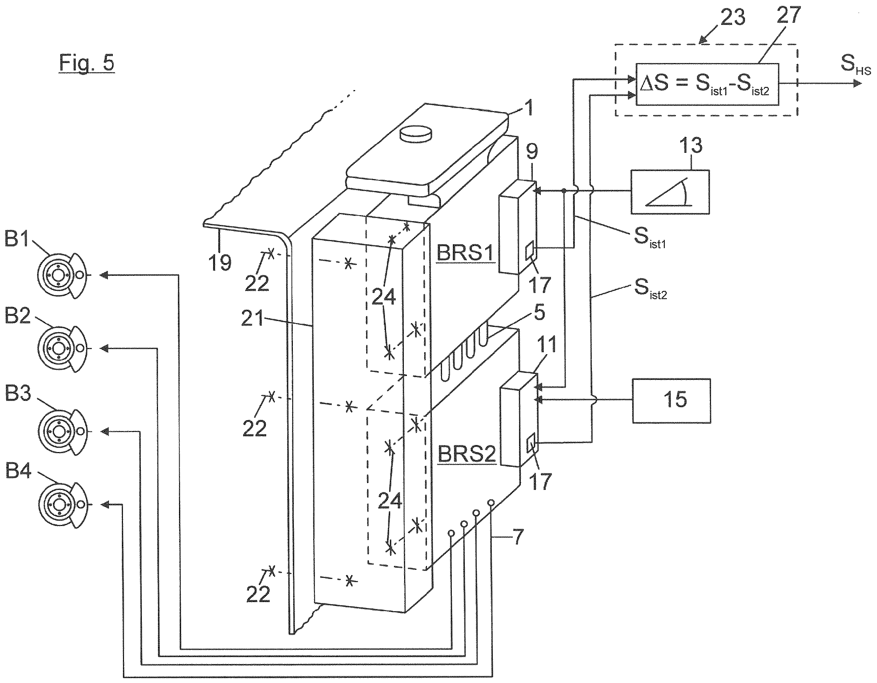

In dem Ausführungsbeispiel der Figur 5 ist in jedem der Steuergeräte 9, 11 der Bremsregelsysteme BRS1, BRS2 jeweils ein interner Sensor 17 als Beschleunigungssensor verbaut. In diesem Fall werden die Sensorsignalverläufe Sᵢₛₜ₁, Sᵢₛₜ₂ der beiden internen Sensoren 17 im Vergleicherbaustein 27 der Auswerteeinheit 23 miteinander verglichen. Es ist somit kein Referenzsignalverlauf in der Auswerteinheit 23 hinterlegt, wie im ersten Ausführungsbeispiel. Vielmehr bildet der Sensorsignalverlauf Sᵢₛₜ₁ des einen internen Sensors 17 den Referenzsignalverlauf für den Sensorsignalverlauf Sᵢₛₜ₂ des anderen internen Sensors 17. Bei einer signifikanten Abweichung ΔS zwischen den beiden Sensorsignalverläufen Sist₁, Sᵢₛₜ₂ erzeugt die Auswerteeinheit 23 das Halterschaden-Signal S_{HS}.

### BEZUGSZEICHENLISTE:

- 1: Hydraulikflüssigkeitsbehälter
- 5: Hydraulikleitung
- 7: Hydraulikleitung
- 9, 11: Steuergeräte
- 13: elektronisches Bremspedal
- 15: Fahrdynamikregelung
- 17: interner Sensor
- 19: Fahrzeugkarosserie
- 22: Schraubverbindungen
- 23: Auswerteeinheit
- 24: Schraubverbindungen
- 25: Referenz
- 27: Vergleicherbaustein
- 29: externer Sensor
- 31: Subtrahierglied
- BRS1: Primärbremsregelsystem
- BRS2: Sekundärbremsregelsystem
- B1 bis B4: Fahrzeugradbremsen
- Sᵢₛₜ: Sensorsignalverlauf
- S_{Ref}: Referenzsignalverlauf
- ΔS: Abweichung
- S_{mod}: modifizierter Sensorsignalverlauf
- S_{F}: Fahrzeugschwingungssignal
- S_{HS}: Halterschaden-Signal

## Patentansprüche

1. Bremsanlage eines Fahrzeugs, mit zumindest einem Bremsregelsystem (BRS1, BRS2) mit einem Bremsdrucksteller, der bei einer Bremsanforderung einen hydraulischen Bremsdruck aufbaut, mit dem Fahrzeugradbremsen (B1 bis B4) betätigbar sind, wobei das Bremsregelsystem (BRS1, BRS2) über einen Halter (21) an der Fahrzeugkarosserie (19) befestigt ist,
**dadurch gekennzeichnet,**
**dass** zur Erkennung eines Halterversagens eine Auswerteeinheit (23) bereitgestellt ist, die einen Sensorsignalverlauf (Sᵢₛₜ) von einem im Bremsregelsystem (BRS1, BRS2) verbauten, internen Sensor (17) erfasst,
**dass** in der Auswerteeinheit (23) ein Signalvergleich erfolgt, bei dem der erfasste Sensorsignalverlauf (Sᵢₛₜ) mit einem Referenzsignalverlauf (S_{Ref}) verglichen wird, und dass bei einer signifikanten Abweichung (ΔS) des erfassten Sensorsignalverlaufs (Sᵢₛₜ) von dem Referenzsignalverlauf (S_{Ref}) die Auswerteeinheit (23) ein Halterschaden-Signal (S_{HS}) erzeugt.

2. Bremsanlage nach Anspruch 1, **dadurch gekennzeichnet, dass** der im Bremsregelsystem (BRS1, BRS2) verbaute interne Sensor (17) ein Füllstandsensor eines Hydraulikflüssigkeitsbehälters (1) des Bremsregelsystems (BRS1, BRS2) ist.

3. Bremsanlage nach Anspruch 1 oder 2, **dadurch gekennzeichnet, dass** der im Bremsregelsystem (BRS1, BRS2) verbaute Sensor (17) ein Beschleunigungssensor ist, auf dessen Grundlage eine Fahrdynamikregelung (15) das Bremsregelsystem (BRS1, BRS2) ansteuert, um Bremseingriffe vorzunehmen.

4. Bremsanlage nach Anspruch 1, 2 oder 3, **dadurch gekennzeichnet, dass** die Bremsanlage als ein Brake-by-wire-System ausgeführt ist, bei dem das Bremsregelsystem (BRS1) ein Primärbremsregelsystem bildet und zusätzlich ein Sekundärbremsregelsystem (BRS2) bereitgestellt ist, das bei einer fehlerhaften Funktion des Primärbremsregelsystems (BRS1) die Funktion des Primärbremsregelsystems (BRS1) übernimmt, und dass insbesondere die beiden Bremsregelsysteme (BRS1, BRS2) gemeinsam am Halter (21) befestigt sind.

5. Bremsanlage nach einem der vorhergehenden Ansprüche, **dadurch gekennzeichnet, dass** die Auswerteeinheit (23) zusätzlich in Signalverbindung mit einem, nicht im Bremsregelsystem (BRS1, BRS2) verbauten, externen Sensor (29) ist, der bei Fahrzeugschwingungen im Fahrbetrieb ein entsprechendes Fahrzeugschwingungssignal (S_{F}) erzeugt, und dass insbesondere die Auswerteeinheit (23) vor der Durchführung des Signalvergleiches das Fahrzeugschwingungssignal (S_{F}) vom Sensorsignalverlauf (Sᵢₛₜ) des internen Sensors (17) subtrahiert, und zwar unter Bildung eines modifizierten Sensorsignalverlaufes (S_{mod}), der von einem, den Fahrzeugschwingungen zugerechneten Schwingungsanteil bereinigt ist, und dass der Signalvergleich mit dem modifizierten Sensorsignalverlauf (S_{mod}) durchgeführt wird.

6. Bremsanlage nach Anspruch 5, **dadurch gekennzeichnet, dass** die Auswerteeinheit (23) das Vorliegen von Halterversagen nur dann prüft, wenn die vom externen Sensor (29) erfasste Fahrzeugschwingung unterhalb eines Grenzwerts ist, so dass eine fehlerhafte Erzeugung eines Halterschaden-Signals (S_{HS}) aufgrund übermäßig großer Fahrzeugschwingung, etwa bei besonders unruhiger Fahrbahn, verhindert ist.

7. Bremsanlage nach einem der vorhergehenden Ansprüche, **dadurch gekennzeichnet, dass** der Referenzsignalverlauf (S_{Ref}) ein Signalverlauf des internen Sensors (17) ist, der sich im normalen Fahrbetrieb sowie bei intaktem Halter (19) einstellt.

8. Bremsanlage nach einem der Ansprüche 4 bis 7, **dadurch gekennzeichnet, dass** in beiden Bremsregelsystemen (BRS1, BRS2) jeweils ein interner Sensor (17) verbaut ist, und dass die Sensorsignalverläufe (S_{Ref}) der beiden internen Sensoren (17) in der Auswerteeinheit (23) miteinander verglichen werden, so dass der Sensorsignalverlauf (Sᵢₛₜ₁) des einen internen Sensors (17) den Referenzsignalverlauf für den Sensorsignalverlauf (S_{Ref}) des anderen internen Sensors (17) bildet.

9. Verfahren zur Erkennung eines Halterversagens in einer Bremsanlage eines Fahrzeugs, mit zumindest einem Bremsregelsystem (BRS1, BRS2) mit einem Bremsdrucksteller, der bei einer Bremsanforderung einen hydraulischen Bremsdruck aufbaut, mit dem Fahrzeugradbremsen (B1 bis B4) betätigbar sind, wobei das Bremsregelsystem (BRS1, BRS2) über einen Halter (21) an der Fahrzeugkarosserie (19) befestigt ist,
**dadurch gekennzeichnet,**
**dass** zur Erkennung eines Halterversagens eine Auswerteeinheit (23) bereitgestellt wird, die einen Sensorsignalverlauf (Sᵢₛₜ) von einem im Bremsregelsystem (BRS1, BRS2) verbauten, internen Sensor (17) erfasst,
**dass** in der Auswerteeinheit (23) ein Signalvergleich erfolgt, bei dem der erfasste Sensorsignalverlauf (Sᵢₛₜ) mit einem Referenzsignalverlauf (S_{Ref}) verglichen wird, und dass bei einer signifikanten Abweichung (ΔS) des erfassten Sensorsignalverlaufs (Sᵢₛₜ) von dem Referenzsignalverlauf (S_{Ref}) die Auswerteeinheit (23) ein Halterschaden-Signal (S_{HS}) erzeugt.

## Claims

1. Braking system of a vehicle, with at least one brake control system (BRS1, BRS2) with a brake pressure regulator which, in case of a braking request, builds up a hydraulic brake pressure by which the vehicle wheel brakes (B1 to B4) can be actuated, wherein the brake control system (BRS1, BRS2) is attached to the vehicle body (19) via a holder (21),
**characterized in that**
for the detection of a holder failure, an evaluation unit (23) is provided, which acquires a sensor signal curve (Sᵢₛₜ) from an internal sensor (17) built into the brake control system (BRS1, BRS2),
**in that** in the evaluation unit (23), a signal comparison occurs, wherein the acquired sensor signal curve (Sᵢₛₜ) is compared to a reference signal curve (S_{Ref}), and **in that** in case of a significant deviation (ΔS) of the acquired sensor signal curve (Sᵢₛₜ) from the reference signal curve (S_{Ref}), the evaluation unit (23) generates a holder damage signal (S_{HS}).

2. Braking system according to claim 1, **characterized in that** the internal sensor (17) built into the brake control system (BRS1, BRS2) is a filling level sensor of a hydraulic fluid container (1) of the brake control system (BRS1, BRS2).

3. Braking system according to claim 1 or 2, **characterized in that** the sensor (17) built into the brake control system (BRS1, BRS2) is an acceleration sensor, on the basis of which an electronic stability control (15) actuates the brake control system (BRS1, BRS2) in order to perform braking engagements.

4. Braking system according to claim 1, 2 or 3, **characterized in that** the braking system is implemented as a brake-by-wire system, wherein the brake control system (BRS1) forms a primary brake control system and, additionally, a secondary brake control system (BRS2) is provided, which, in case of an incorrect operation of the primary brake control system (BRS1), assumes the function of the primary brake control system (BRS1), and **in that** in particular the two brake control systems (BRS1, BRS2) are attached together to the holder (21).

5. Braking system according to any one of the preceding claims, **characterized in that** the evaluation unit (23) is additionally in signal connection with an external sensor (29) which is not built into the brake control system (BRS1, BRS2), which, in case of vehicle vibrations during driving operation, generates a corresponding vehicle vibration signal (S_{F}), and **in that** in particular the evaluation unit (23) subtracts the vehicle vibration signal (S_{F}) from the sensor signal curve (Sᵢₛₜ) of the internal sensor (17) before performing the signal comparison, namely with the formation of a modified sensor signal curve (S_{mod}) which is cleaned of a vibration component attributed to the vehicle vibrations, and **in that** the signal comparison is performed with the modified sensor signal curve (S_{mod}).

6. Braking system according to claim 5, **characterized in that** the evaluation unit (23) checks for the presence of holder failure only if the vehicle vibration acquired by the external sensor (29) is below a limit value, so that an incorrect generation of a holder damage signal (S_{HS}) due to excessively high vehicle vibration, for example in case of particularly rough road, is prevented.

7. Braking system according to any one of the preceding claims, **characterized in that** the reference signal curve (S_{Ref}) is a signal curve of the internal sensor (17) which appears during normal driving operation as well as in case of intact holder (19).

8. Braking system according to any one of claims 4 to 7, **characterized in that** in both brake control systems (BRS1, BRS2), a respective internal sensor (17) is built in, and **in that** the sensor signal curves (S_{Ref}) of the two internal sensors (17) are compared to one another in the evaluation unit (23), so that the sensor signal curve (Sᵢₛₜ₁) of the one internal sensor (17) forms the reference signal curve for the sensor signal curve (S_{Ref}) of the other internal sensor (17).

9. Method for detecting a holder failure in a braking system of a vehicle, with at least one brake control system (BRS1, BRS2) with a brake pressure regulator which, in case of a braking request, builds up a hydraulic brake pressure by which the vehicle wheel brakes (B1 to B4) can be actuated, wherein the brake control system (BRS1, BRS2) is attached to the vehicle body (19) via a holder (21),
**characterized in that**
for the detection of a holder failure, an evaluation unit (23) is provided, which acquires a sensor signal curve (Sᵢₛₜ) from an internal sensor (17) built into the brake control system (BRS1, BRS2),
**in that** in the evaluation unit (23), a signal comparison occurs, wherein the acquired sensor signal curve (Sᵢₛₜ)is compared to a reference signal curve (S_{Ref}), and **in that** in case of a significant deviation (ΔS) of the acquired sensor signal curve (Sᵢₛₜ) from the reference signal curve (S_{Ref}), the evaluation unit (23) generates a holder damage signal (S_{HS}).

## Revendications

1. Installation de freinage d'un véhicule, avec au moins un système de régulation de freinage (BRS1, BRS2) avec un régulateur de pression de freinage qui, lors d'une demande de freinage, établit une pression de freinage hydraulique avec laquelle des freins de roue de véhicule (B1 à B4) peuvent être actionnés, dans laquelle le système de régulation de freinage (BRS1, BRS2) est fixé sur la carrosserie de véhicule (19) par l'intermédiaire d'un support (21),
**caractérisée en ce que**
pour détecter une défaillance de support, une unité d'évaluation (23) qui acquit une courbe de signal de capteur (Sᵢₛₜ) d'un capteur interne (17) monté dans le système de régulation de freinage (BRS1, BRS2) est fournie,
une comparaison de signal est effectuée dans l'unité d'évaluation (23), lors de laquelle la courbe de signal de capteur (Sᵢₛₜ) acquise est comparée à une courbe de signal de référence (S_{Ref}), et **en ce que**, lors d'un écart significatif (ΔS) de la courbe de signal de capteur (Sᵢₛₜ) acquise par rapport à la courbe de signal de référence (S_{Ref}), l'unité d'évaluation (23) génère un signal de dommage de support (S_{HS}).

2. Installation de freinage selon la revendication 1, **caractérisée en ce que** le capteur interne (17) monté dans le système de régulation de freinage (BRS1, BRS2) est un capteur de niveau de remplissage d'un réservoir de fluide hydraulique (1) du système de régulation de freinage (BRS1, BRS2).

3. Installation de freinage selon la revendication 1 ou 2, **caractérisée en ce que** le capteur (17) monté dans le système de régulation de freinage (BRS1, BRS2) est un capteur d'accélération sur la base duquel une régulation de dynamique de conduite (15) commande le système de régulation de freinage (BRS1, BRS2) pour effectuer des interventions de freinage.

4. Installation de freinage selon la revendication 1, 2 ou 3, **caractérisée en ce que** l'installation de freinage est réalisée comme un système brake-by-wire, dans lequel le système de régulation de freinage (BRS1) forme un système de régulation de freinage primaire et fournit en outre un système de régulation de freinage secondaire (BRS2) qui prend en charge le fonctionnement du système de régulation de freinage primaire (BRS1) lors d'un fonctionnement défectueux du système de régulation de freinage primaire (BRS1), et **en ce que** en particulier les deux systèmes de régulation de freinage (BRS1, BRS2) sont fixés ensemble sur le support (21).

5. Installation de freinage selon l'une quelconque des revendications précédentes, **caractérisée en ce que** l'unité d'évaluation (23) est en outre en connexion de signal avec un capteur externe (29) non monté dans le système de régulation de freinage (BRS1, BRS2), capteur qui génère un signal d'oscillation de véhicule (S_{F}) correspondant lors d'oscillations de véhicule en mode de conduite, et **en ce que** en particulier l'unité d'évaluation (23) soustrait, avant la mise en œuvre de la comparaison de signal, le signal d'oscillation de véhicule (S_{F}) de la courbe de signal de capteur (Sᵢₛₜ) du capteur interne (17), à savoir en formant une courbe de signal de capteur modifiée (S_{mod}) qui est nettoyée d'une part de vibration attribuée aux oscillations de véhicule, et **en ce que** la comparaison de signal est effectuée avec la courbe de signal de capteur modifiée (S_{mod}).

6. Installation de freinage selon la revendication 5, **caractérisée en ce que** l'unité d'évaluation (23) vérifie la présence d'une défaillance de support uniquement si l'oscillation de véhicule acquise par le capteur externe (29) est inférieure à une valeur limite, de sorte qu'une génération défectueuse d'un signal de dommage de support (S_{HS}) en raison d'une vibration du véhicule excessivement élevée, par exemple en cas de chaussée particulièrement instable, est empêchée.

7. Installation de freinage selon l'une quelconque des revendications précédentes, **caractérisée en ce que** la courbe de signal de référence (S_{Ref}) est une courbe de signal du capteur interne (17) qui se règle en mode de conduite normal ainsi qu'en cas de support (19) intact.

8. Installation de freinage selon l'une quelconque des revendications 4 à 7, **caractérisée en ce que** respectivement un capteur interne (17) est monté dans les deux systèmes de régulation de freinage (BRS1, BRS2), et **en ce que** les courbes de signal de capteur (S_{Ref}) des deux capteurs internes (17) sont comparées entre elles dans l'unité d'évaluation (23), de sorte que la courbe de signal de capteur (Sᵢₛₜ₁) de l'un des capteurs internes (17) forme la courbe de signal de référence pour la courbe de signal de capteur (S_{Ref}) de l'autre capteur interne (17).

9. Procédé de détection d'une défaillance de support dans une installation de freinage d'un véhicule, avec au moins un système de régulation de freinage (BRS1, BRS2) avec un régulateur de pression de freinage qui, lors d'une demande de freinage, établit une pression de freinage hydraulique avec laquelle des freins de roue de véhicule (B1 à B4) peuvent être actionnés, dans laquelle le système de régulation de freinage (BRS1, BRS2) est fixé sur la carrosserie de véhicule (19) par l'intermédiaire d'un support (21),
**caractérisé en ce que**
pour détecter une défaillance de support, une unité d'évaluation (23) qui acquit une courbe de signal de capteur (Sᵢₛₜ) d'un capteur interne (17) monté dans le système de régulation de freinage (BRS1, BRS2) est fournie,
une comparaison de signal est effectuée dans l'unité d'évaluation (23), lors de laquelle la courbe de signal de capteur (Sᵢₛₜ) acquise est comparée à une courbe de signal de référence (S_{Ref}), et **en ce que**, lors d'un écart significatif (ΔS) de la courbe de signal de capteur (Sᵢₛₜ) acquise par rapport à la courbe de signal de référence (S_{Ref}), l'unité d'évaluation (23) génère un signal de dommage de support (S_{HS}).
